# EUROPEAN PATENT APPLICATION

(11) **EP 2 393 142 A1**
(43) Date of publication of application: **07.12.2011**
(21) Application number: 11151854.4
(22) Date of filing: 24.01.2011
(51) Int. Cl.: H01M 2/10

(54) **Battery storage tray**

(30) Priority: 07.06.2010 US 352287 P; 17.12.2010 US 971922
(71) Applicant: Samsung SDI Co., Ltd., Yongin-si, Gyeonggi-do (KR)
(72) Inventor: Seong, Jaeil, Gyeonggi-do (KR); Woo, Soonki, Gyeonggi-do (KR); Jeon, Kiyuon, Gyeonggi-do (KR); Kim, Sehan, Gyeonggi-do (KR); Yoshio, Hideaki, Gyeonggi-do (KR)
(74) Representative: Grey, Ian Michael

(57) **Abstract**

A battery storage tray is provided. The tray includes a plurality of battery storage units, each storage unit having a battery receiving space defined by a base and a pair of facing side walls spaced from each other by facing end walls each of which upstand from the base. Each facing side wall has substantially planar portions that extend from the ends of each of the facing end walls that define, together with the end walls, part of a first pocket in said battery receiving space. The first pocket is configured to receive a prismatic battery. Each facing side wall also has an arcuate portion that extends between the substantially planar portions of each side wall and which extending outwardly in opposite directions to define a second pocket in said battery receiving space. The second pocket is configured to receive a cylindrical battery.

## Description

The present invention relates to a battery storage tray.

Rechargeable batteries, which can be repeatedly charged and are small-sized, large-capacity batteries, are used as the power source for various portable electronic devices such as notebook computers, camcorders, cellular phones, or the like.

In the manufacture of the rechargeable battery, the battery is subjected to an aging process to effectuate its capability as a proper battery. The aging process is a process for charging a rechargeable battery immediately after the rechargeable battery is formed. In this stage, the rechargeable battery generates an electrochemical energy by electrical energy supplied thereto.

The aging process is performed on a plurality of rechargeable batteries. To this end, a tray storing the plurality of rechargeable batteries is required.

The present invention seeks to provide a battery storage tray, which allows multiple types of batteries to be stored in a single battery storage unit, thereby reducing the manufacturing cost of the battery storage tray required by battery type and reducing the storage space required for storing multiple types of battery storage trays.

According to the invention, there is provided a battery storage tray including a plurality of battery storage units, each storage unit having a battery receiving space defined by a base, a pair of facing side walls spaced from each other by facing end walls each of which upstand from the base, each facing side wall having substantially planar portions that extend from the ends of each of the facing end walls, the substantially planar portions and the end walls together defining part of a first pocket in said battery receiving space configured to receive a prismatic battery, each facing side wall also having an arcuate portion that extends between the substantially planar portions of each side wall, each arcuate portion extending outwardly in opposite directions to define a second pocket in said battery receiving space, said second pocket being configured to receive a cylindrical battery.

In one embodiment, each of said arcuate portions of the facing side walls have a recess to receive a holding member to retain a prismatic or cylindrical battery in said battery receiving space.

Preferably, the uppermost edges of the facing end walls and the facing side walls are tapered, apart from the uppermost edges of said recesses of each facing side wall.

In a preferred embodiment, the battery receiving try comprises first and second guide members to control rotation of a prismatic battery having side surfaces and a thickness which is less than the distance between opposing substantially planar portions of the facing side walls during insertion into said first pocket.

The first and second guide members may be configured so that one side surface of the prismatic battery contacts a substantially planar portion of one facing side wall and the other side surface of the prismatic battery contacts a substantially planar portion of the other facing side wall on an opposite side of said arcuate portion.

Each of the first and second guide members may be located on the base at a junction between the substantially planar portion of a facing side wall and an end wall.

In a preferred embodiment, said substantially planar portion of each facing side wall that is contacted by the side surfaces of the prismatic battery includes an inwardly extending protrusion such that opposite side surfaces of a prismatic battery received in said first pocket contact said protrusions.

Each protrusion may be configured so as to make a point or line contact with opposite side surfaces of a prismatic battery received in said first pocket.

The line contact or point contact may be on respective side surfaces of the battery adjacent to respective rounded end portions of the battery.

Preferably, each guide member comprises a planar upper surface that extends at an angle relative to the base, such that a prismatic battery makes contact with the planar upper surfaces of each guide member during insertion into the first pocket, said planar upper surfaces being configured to cause the prismatic battery to rotate during further insertion.

In one embodiment, the planar upper surfaces of each guide member are angled in opposite directions and extend from planar side wall portions of opposite facing side walls on either side of said arcuate portion in a direction towards an opposite planar side wall portion of the facing side wall.

The planar upper surfaces may narrow in a direction away from adjacent end walls.

In one embodiment, the planar upper surface of each guide member comprises a first portion extending at a first angle from the planar side wall and a second portion extending at a second angle from the first portion, wherein the second angle is steeper than the first angle.

In a preferred embodiment, the first and second guide members extend from each facing end wall in a direction towards each other and terminate at or before the end of the planar side wall portions is reached so that when a cylindrical battery is inserted into said second pocket, it extends between said guide members and contacts the base.

In another embodiment, each battery receiving space comprises a third pocket to receive another prismatic battery in place of a prismatic battery or cylindrical battery, said third pocket being defined by a second pair of facing side walls spaced from each other by facing end walls each of which upstand from the base, said second pair of facing side walls having substantially planar portions that extend from the ends of each of the facing end walls, the substantially planar portions and the end walls together defining part of said third pocket in said battery receiving space configured to receive a different prismatic battery, the facing side walls forming the third pocket being spaced from facing side walls of said first pocket by part of said arcuate portion that extends between and connects the substantially planar portions of each side wall forming the first and third pockets, said second pocket being defined by said arcuate portions and being partially formed by a portion of said first and second pockets.

In this embodiment, third and fourth guide members are provided to control rotation of a prismatic battery inserted into said third pocket so that one side surface of the prismatic battery contacts a substantially planar portion of one facing side wall of said third pocket and the other side surface of the prismatic battery contacts a substantially planar portion of the other facing side wall of the third pocket.

Preferably, the battery storage tray of the invention may further include a recess in the base and an opening extending through said recess.

In the battery storage tray according to embodiments of the invention, since multiple types of batteries can be stored in a single battery storage unit, the manufacturing cost of the battery storage tray required by battery type can be reduced. Further, the storage space required for storing multiple types of battery storage trays can also be reduced.

Embodiments of the invention will now be described, by way of example only, with reference to the accompanying drawings, in which:
FIG. 1 is a perspective view of a battery storage tray according to an embodiment of the present invention;
FIG. 2 is a plan view of the battery storage tray shown in FIG. 1;
FIG. 3 is an enlarged plan view illustrating a state in which a first prismatic battery is stored in a single battery storage unit shown in FIG. 2;
FIG. 4 is a cross-sectional view of the battery storage unit taken along the line A-A' of FIG. 3;
FIG. 5 is a cross-sectional view of the battery storage unit taken along the line B-B' of FIG. 3;
FIG. 6 is a cross-sectional view of the battery storage unit taken along the line C-C' of FIG. 3;
FIG. 7 is a perspective view of a first guide unit of the battery storage unit shown in FIG. 3;
FIG. 8 is an enlarged plan view illustrating a state in which a second prismatic battery is stored in a single battery storage unit shown in FIG. 2;
FIG. 9 is a cross-sectional view illustrating a positional relationship between each of the first and second prismatic batteries and the first guide unit shown in FIG. 3;
FIG. 10 is a cross-sectional view of the battery storage unit taken along the line D-D' of FIG. 3 in a state in which a cylindrical battery is stored in a single battery storage unit shown in FIG. 2;
FIG. 11 is a cross-sectional view illustrating a portion of a battery storage tray according to another embodiment of the present invention, the portion corresponding to the battery storage tray portion shown in FIG. 6;
FIG. 12 is a perspective view of a first guide unit of the battery storage unit shown in FIG. 11; and
FIG. 13 is a plan view illustrating a portion of a battery storage tray according to still another embodiment of the present invention, the portion corresponding to the battery storage tray portion shown in FIG. 3.

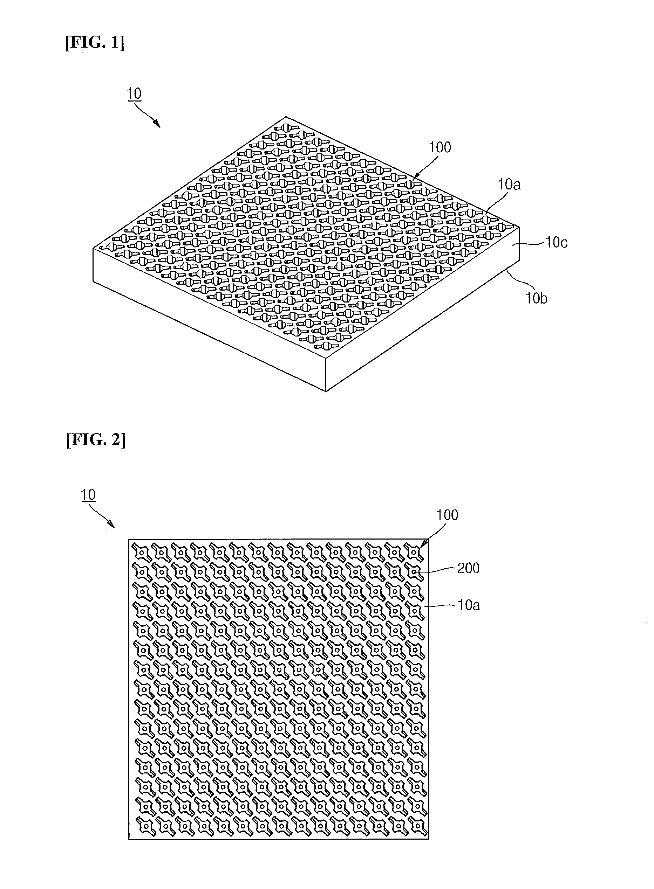

FIG. 1 is a perspective view of a battery storage tray according to an embodiment of the present invention, and FIG. 2 is a plan view of the battery storage tray shown in FIG. 1.

Referring to FIG. 1, the battery storage tray 10 may be formed of an injection mold having a substantially hexagonal shape, and may include a first surface 10a, a second surface 10b opposite to the first surface 10a, and a third surface 10c connecting the first surface 10a and the second surface 10b.

Referring to FIG. 2, the battery storage tray 10 includes a battery storage unit 100 in which a battery is received through the first surface 10a, and a through-hole 200 formed at a predetermined area of the second surface 10b, the predetermined area corresponding to the battery storage unit 100. The battery storage tray 10 stores a plurality of batteries to be used for an aging process. Accordingly, a plurality of battery storage units 100 may be provided in the battery storage tray 10. The aging process is a process for charging batteries before shipment, and is performed by making probe pins contact with an electrode terminal of a battery exposed through an upper part of the battery storage unit 100 and another electrode terminal of the battery exposed through the through-hole 200, and applying a charging current to the respective electrode terminals. In the following, the invention will be described with regard to one among the plurality of battery storage units 100 constituting the battery storage tray 10.

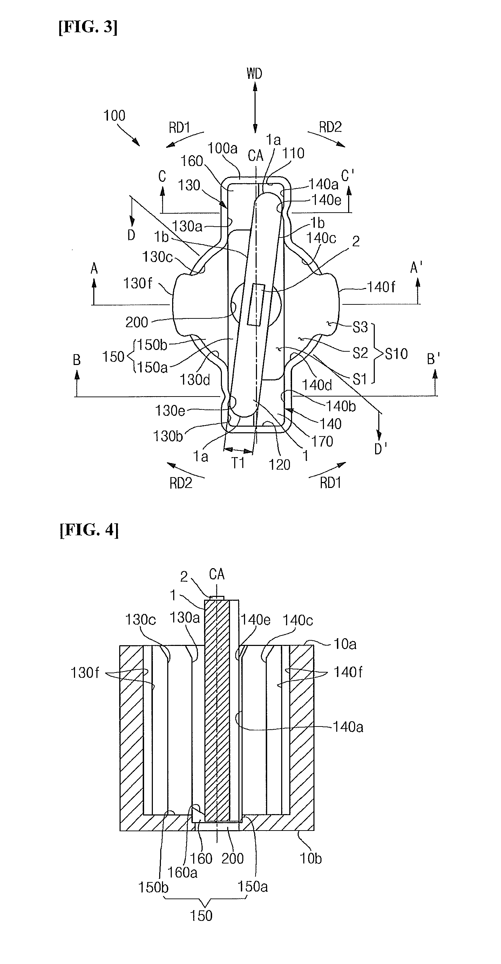

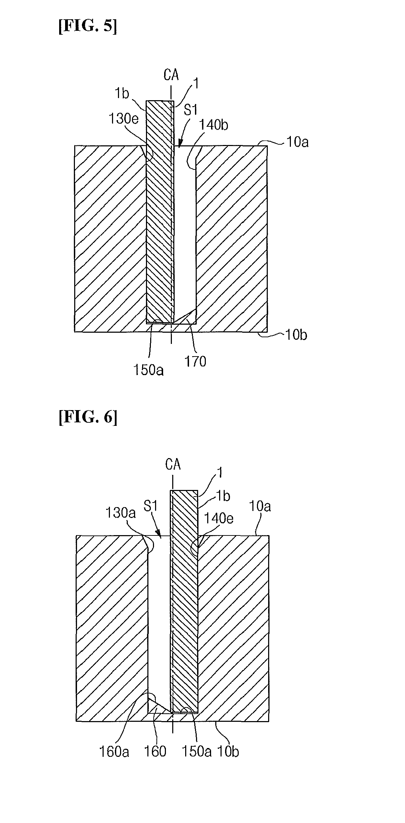

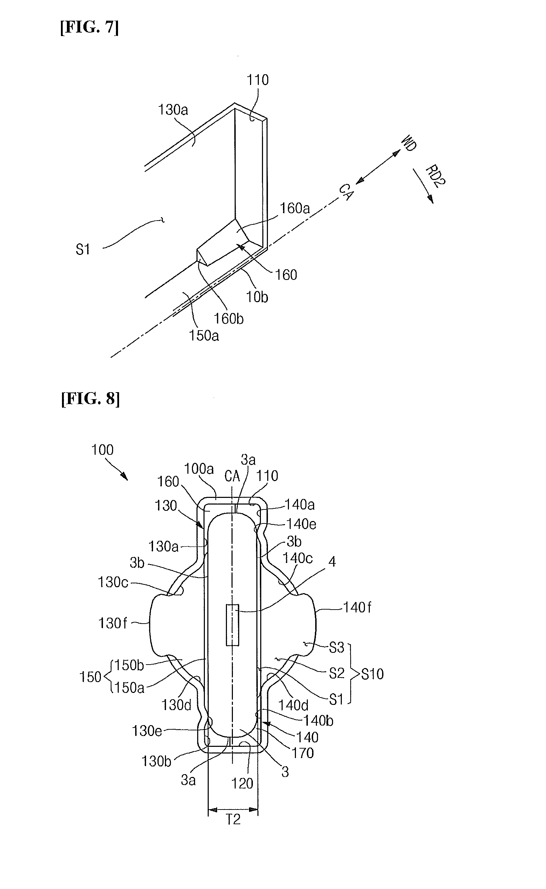

FIG. 3 is an enlarged plan view illustrating a state in which a first prismatic battery is stored in a single battery storage unit shown in FIG. 2, FIG. 4 is a cross-sectional view of the battery storage unit taken along the line A-A' of FIG. 3, FIG. 5 is a cross-sectional view of the battery storage unit taken along the line B-B' of FIG. 3, FIG. 6 is a cross-sectional view of the battery storage unit taken along the line C-C' of FIG. 3, and FIG. 7 is a perspective view of a first guide unit of the battery storage unit shown in FIG. 3.

Referring to FIG. 3, the battery storage unit 100 provides first and second pockets S10 in which a prismatic or cylindrical battery is practically stored. In detail, the battery storage unit 100 may include a first pocket S1 having a substantially rectangular shape, in which a prismatic battery is stored, a second pocket S2 having a substantially cylindrical shape, in which a cylindrical battery is stored, and a recess S3 which receives a holding device to hold a prismatic battery or a cylindrical battery in place. In order to facilitate storage of the prismatic battery or the cylindrical battery, the battery storage unit 100 may include a taperered surface 100a formed on the upper portion of the first and second pockets S10. To form the first and second pockets S10, the battery storage unit 100 may include facing end walls 110, 120, and first and second facing side walls 130, 140, and a base 150. In addition, the battery storage unit 100 may include a first guide member 160 and a second guide member 170 to guide and arrange multiple types of prismatic batteries (for example, prismatic batteries having different thicknesses) stored in the first pocket S1.

The first and second endwalls 110, 120 face each other with a prismatic battery, for example, a first prismatic battery 1 having a first thickness T1 stored in the first pocket S1, interposed therebetween, and are planarly formed. The first end wall 110 and the second end wall 120 restrict the first prismatic battery 1 from moving in a width direction WD. Here, the first thickness T1 may be, for example, 4 mm. Meanwhile, the first prismatic battery 1 may include a top surface from which the electrode terminal 2 protrudes, opposing planar side surfaces 1b spaced from each other by rounded portions 1a and, and a bottom surface opposite to the top surface. The first end wall 110 and the second end wall 120 face approximately the rounded portion 1a of the first prismatic battery 1.

The first and second facing side walls 130, 140 connect the first endwall 110 and the second endwall 120, and face each other with a first prismatic battery 1 interposed therebetween. In detail, the first facing side wall 130 and the second facing side wall 140 face approximately the planar portion 1b of a first prismatic battery 1. The first facing side wall 130 and the second facing side wall 140 restrict the first prismatic battery 1 from rotating in directions RD1 and RD2.

In detail, the first facing side wall 130 may include first substantially planar portions 130a, 130b, arcuate portions 130c and 130d, a first inwardly extending protrusion 130e, and a first holding recess 130f. The first substantially planar portions 130a, 130b are connected to a first end of the first facing side wall 130 and a first end of the second facing side wall 140, respectively, and are formed approximately at right angle with respect to the first facing side wall 130 and the second facing side wall 140. In addition, the first planar portions 130a, 130b are planarly formed. The first arcuate portions 130c, 130d extend from the first substantially planar portions 130a, 130b and outwardly extend from the central axis CA to have round shapes. The first inwardly extending protrusion 130e is formed in such a manner that a portion of the first substantially planar portion 130b protrudes toward the first prismatic battery 1. The first holding recess 130f is connected between the first arcuate portion 130c and the first arcuate portion 130d, and has a round shape protruding from the central axis CA outwardly further than the first arcuate portions 130c, 130d. The tapered surface 100a may not be formed at a portion of the upper portion of the battery storage unit 100 corresponding to the first holding recess 130f.

In detail, the second facing side wall 140 may include second substantially planar portions 140a, 140b, second arcuate portions 140c, 140d, a second inwardly extending protrusion 140e, and a second holding recess 140f. The second substantially planar portions 140a, 140b are connected to a second end of the first endwall 110 and a second end of the second end wall 120, respectively, and are formed approximately at right angle with respect to the first and second end walls 110, 120. In addition, the second substantially planar portions 140a, 140b are planarly formed. The second arcuate portions 140c, 140d extend from the second substantially planar portions 140a, 140b and are symmetrical with the first arcuate portions 130c, 130d about the central axis CA. The second inwardly extending protrusion 140e is formed in such a manner that a portion of the second substantially planar portion 140b protrudes toward the first prismatic battery 1, and faces the first inwardly extending protrusion 130e in a diagonal direction. The second holding recess 140f is connected between the second arcuate portions 140c, 140d, and is symmetrical to the first holding recess 130f about the central axis CA. The tapered surface 100a may not be formed at a portion of the upper portion of the battery storage unit 100 corresponding to the second holding recess 140f.

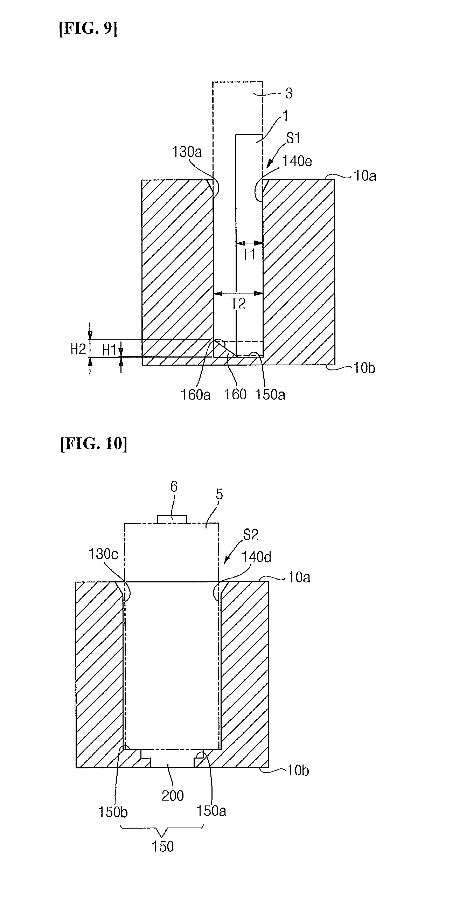

The base 150 connects the first end wall 110, the second end wall 120, the first facing side wall 130 and the second facing side wall 140 to one another. In detail, the base 150 includes a first bottom surface 150a and a second bottom surface 150b. The first bottom surface 150a faces the bottom surface of the first prismatic battery 1 stored in the first pocket S1. The second bottom surface 150b contacts the bottom surface of a cylindrical battery (5 of FIG. 10) stored in the second pocket S2 and may extend to an area corresponding to the recess S3. The second bottom surface 150b may be positioned higher than the first bottom surface 150a.

As described above, the first end wall 110, the second end wall 120, the first substantially planar portion 130a, 130b, the second substantially planar portions 140a, 140b, and the first bottom surface 150a form the first pocket S1 in which the first prismatic battery 1 is stored. Here, the first prismatic battery 1 having the first thickness T1 is stored in the first pocket S1 while rotating in the rotation direction RD2. As shown in FIGS. 5 and 6, the first inwardly extending protrusion 130e and the second inwardly extending protrusion 140e come into contact with the side surface of the first prismatic battery 1. In detail, the first inwardly extending protrusion 130e and the second inwardly extending protrusion 140e come into line contact or point contact with an area right before the round portion 1a of the side surfaces 1b of the first prismatic battery 1. The first inwardly extending protrusion 130e and the second inwardly extending protrusion 140e support and fix the first prismatic battery 1.

As shown in FIG. 7, the first guide member 160 is formed to protrude on the first bottom surface 150a so as to come into contact with lower parts of the first planar portion 130a and the first end wall 110. In detail, the first guide member 160 includes a first inclined planar upper surface 160a and a first guide side surface 160b.

The first inclined planar upper surface 160a is a surface inclined in directions of the central axis CA and the first bottom surface 150a at the lower part of the first planar portion 130a spaced apart from the first bottom surface 150a. The first inclined planar upper surface 160a is in contact with the first planar portion 130a and the first bottom surface 150a. In addition, the farther from the first prismatic battery 1 in the width direction WD of the first prismatic battery 1, the wider the first inclined planar upper surface 160a becomes.

The first guide side surface 160b is connected to the first inclined planar upper surface 160a, the first planar portion 130a, and to the first bottom surface 150a. When the first prismatic battery 1 is rotationally inserted into the first pocket S1, the first guide member 160 guides the first prismatic battery 1 to rotate in the rotation direction RD2 by the first inclined planar upper surface 160a. In addition, the first guide member 160 fixes the first prismatic battery 1 by the first inclined planar upper surface 160a so as to prevent the rotated first prismatic battery 1 from moving.

The second guide member 170 is formed to protrude on the first bottom surface 150a so as to come into contact with lower parts of the second planar portion 140b of the second facing side wall 140 and the second end wall 120. Since the second guide member 170 is shaped to be symmetrical with the first guide member 160 about the central axis CA in a diagonal direction, a detailed description thereof will not be given. The second guide member 170 guides rotation of the first prismatic battery 1 in the rotation direction RD2 in cooperation with the first guide member 160 when the first prismatic battery 1 is rotationally inserted into the first pocket S1. In addition, the second guide member 170 fixes the first prismatic battery 1 in cooperation with the first guide member 160 so as to prevent the rotated first prismatic battery 1 from moving.

Next, an exemplary case in which a second prismatic battery 3 having a second thickness T2 is stored in the aforementioned battery storage unit 100 will be described.

FIG. 8 is an enlarged plan view illustrating a state in which a second prismatic battery is stored in a single battery storage unit shown in FIG. 2.

Referring to FIG. 8, the second prismatic battery 3 having a second thickness T2 includes a top surface from which the electrode terminal 4 protrudes, spaced parallel side surfaces 3b separated by rounded portions 3a, and a bottom surface opposite to the top surface. Here, the second thickness T2 of the second prismatic battery 3 is greater than the first thickness T1 of the first prismatic battery 1. The second thickness T2 of the second prismatic battery 3 may be, for example, 7 mm. The second prismatic battery 3 is stored in the first pocket S1 without being rotated. Thus, it is understood that prismatic batteries having different thicknesses can be stored in the first pocket S1 with different rotation rates. Meanwhile, since a connection relationship between each of the first inwardly extending protrusion 130e and the second inwardly extending protrusion 140e and the second prismatic battery 3 is the same as that between each of the first inwardly extending protrusion 130e and the second inwardly extending protrusion 140e and the first prismatic battery 1, a detailed description thereof will not be given.

A positional relationship between each of the first prismatic battery 1 and the second prismatic battery 3 and the first guide member 160 will now be described. FIG. 9 is a cross-sectional view illustrating a positional relationship between each of the first and second prismatic batteries and the first guide member shown in FIG. 3.

Referring to FIG. 9, the first prismatic battery 1 having the first thickness T1 rotationally moves to the lower part of the first inclined planar upper surface 160a by the first inclined planar upper surface 160a of the first guide member 160 to then be positioned at a first height H1 from the first bottom surface 150a. By contrast, the second prismatic battery 3 having the second thickness T2 does not rotationally move along the first inclined planar upper surface 160a of the first guide member 160, so that it is positioned at a second height H2 from the first bottom surface 150a. From this understanding, it is easily appreciated that the smaller the thickness of a prismatic battery, the more the prismatic battery rotationally rotates along the first inclined planar upper surface 160a of the first guide member 160.

Although not shown in the drawing, the positional relationship between each of the first prismatic battery 1 and the second prismatic battery 3 and the second guide member 170 is the same as that between each of the first prismatic battery 1 and the second prismatic battery 3 and the first guide member 160.

Next, an exemplary case in which a cylindrical battery 5 is stored in the single battery storage unit 100 shown in FIG. 2 will be described.

FIG. 10 is a cross-sectional view of the battery storage unit taken along the line D-D' of FIG. 3 in a state in which a cylindrical battery is stored in a single battery storage unit shown in FIG. 2.

Referring to FIG. 10, the cylindrical battery 5 having a top surface from which an electrode terminal 6 protrudes is stored in the second pocket S2. The second pocket S2 is formed by the first arcuate portions 130c, 130d, the second arcuate portions 140c, 140d and the second bottom surface 150b, which are shown in FIG. 3.

As described above, the battery storage tray 10 according to an embodiment of the present invention includes the battery storage unit 100 providing the first pocket S1 in which the first guide member 160 and the second guide member 170 are formed, and the second pocket S2, thereby storing multiple types of batteries, that is, prismatic batteries having different thicknesses as well as a cylindrical battery, in a single battery storage unit 100. It will be appreciated that the second pocket is partially formed by a portion of the first pocket.

Therefore, the battery storage tray 10 according to an embodiment of the present invention can reduce the manufacturing cost of the battery storage tray required by battery type and reduce the storage space required for storing multiple types of battery storage trays.

Next, a battery storage tray according to another embodiment of the present invention will be described.

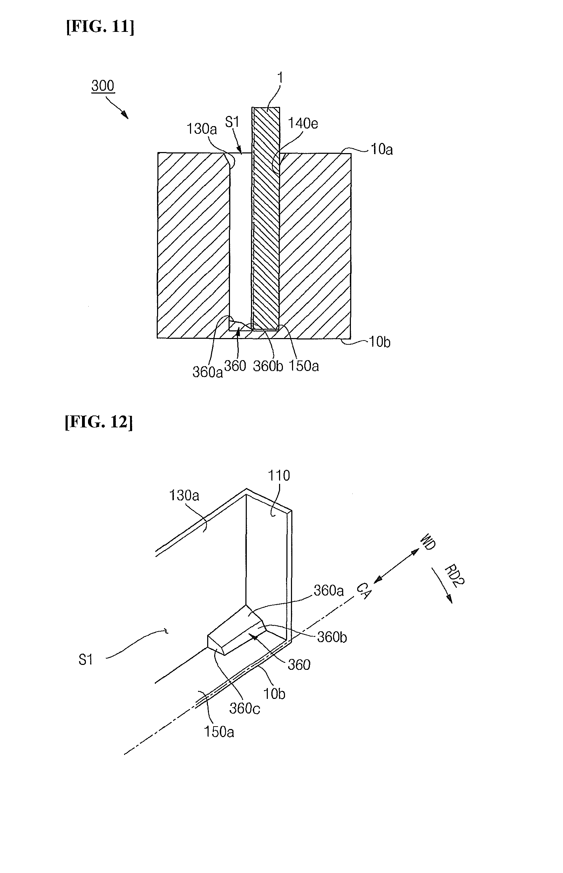

FIG. 11 is a cross-sectional view illustrating a portion of a battery storage tray according to another embodiment of the present invention, the portion corresponding to the battery storage tray portion shown in FIG. 6, and FIG. 12 is a perspective view of a first guide member of the battery storage unit shown in FIG. 11.

The battery storage tray according to another embodiment of the present invention has substantially the same configuration and functions as those of the battery storage tray 10 according to an embodiment, except for the configuration of a first guide member 360 of a battery storage unit 300. Thus, the battery storage tray according to the present embodiment will be described with emphasis on the first guide member 360 of the battery storage unit 300.

Referring to FIGS. 11 and 12, the first guide member 360 of the battery storage unit 300 is formed to protrude on a first bottom surface 150a so as to come into contact with lower parts of a first planar portion 130a and a first end wall 110. The first guide member 360 of the battery storage unit 300 is similar to the first guide member 160 of the battery storage unit 100, except that it has two inclined surfaces. In detail, the first guide unit 360 includes a first inclined planar upper surface 360a, a second inclined planar upper surface 360b, and a first guide side surface 360c. The first inclined planar upper surface 360a extends at a first angle from the substantially planar side wall and the second inclined planar upper surface 360b extends at a second angle from the first inclined planar upper surface 360b. The second angle is steeper than the first angle.

The first inclined planar upper surface 360a is a surface inclined in directions of the central axis CA and the first bottom surface 150a at the lower part of the first planar portion 130a spaced apart from the first bottom surface 150a. The first inclined planar upper surface 360a is in contact with the first planar portion 130a but is not in contact with the first bottom surface 150a. In addition, the farther from the first prismatic battery 1 in the width direction WD of the first prismatic battery 1, the wider the first inclined planar upper surface 160a becomes.

The second inclined planar upper surface 360b is an inclined surface connecting the first inclined planar upper surface 360a and the first bottom surface 150a. The farther from the first prismatic battery 1 in the width direction WD of the first prismatic battery 1, the wider the second inclined planar upper surface 360b becomes.

The first guide side surface 360c is connected to the first inclined planar upper surface 360a, the second inclined planar upper surface 360b, the first planar portion 130a, and the first bottom surface 150a.

When the first prismatic battery 1 is rotationally inserted into the first pocket S1, the first guide member 360 guides the first prismatic battery 1 to rotate in a more secured, flexible manner by the first inclined planar upper surface 360a and the second inclined planar upper surface 360b. In addition, the first guide member 360 more securely fixes the first prismatic battery 1 by the first inclined planar upper surface 360a or the second inclined planar upper surface 360b so as to prevent the rotated first prismatic battery 1 from moving. Here, the second inclined planar upper surface 360b is advantageous for fixing a prismatic battery having a relatively small thickness.

Since a second guide member (not shown) is shaped to be symmetrical with the first guide member 360 about the central axis CA in a diagonal direction, it is not illustrated in the drawing and a detailed description thereof will not be given. The second guide member functions to guide rotation of the first prismatic battery 1 in a more secured, flexible manner in cooperation with the first guide member 360 when the first prismatic battery 1 is rotationally inserted into the first pocket S1, and more securely fixes the rotated first prismatic battery 1 so as to prevent the first prismatic battery 1 from moving.

As described above, the battery storage tray according to another embodiment of the present invention includes the battery storage unit 300 providing the first pocket S1 in which the first guide member 360 having two inclined surfaces and the second guide member are formed, thereby storing prismatic batteries having different thicknesses in a single battery storage unit 300 in a more secured, flexible manner.

Next, a battery storage tray according to still another embodiment of the present invention will be described.

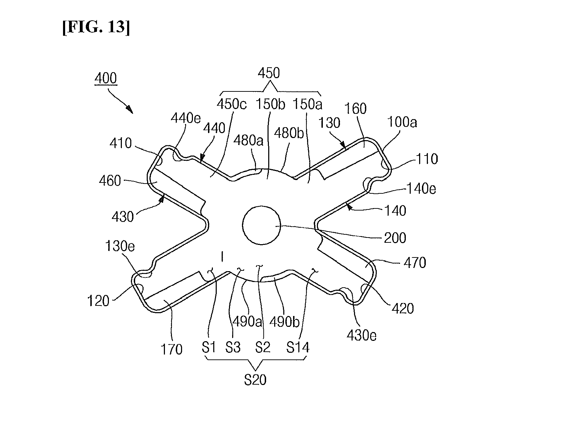

FIG. 13 is a plan view illustrating a portion of a battery storage tray according to still another embodiment of the present invention, the portion corresponding to the battery storage tray portion shown in FIG. 3.

The battery storage tray according to still another embodiment of the present invention has substantially the same configuration and functions as those of the battery storage tray 10 according to an embodiment, except that a battery storage unit 400 further includes a third pocket S14. Thus, the battery storage tray according to the present embodiment will be described with emphasis on the third pocket S14 of the battery storage unit 400.

Referring to FIG. 13, the battery storage unit 400 provides a space S20 in which a battery is practically stored. In detail, the battery storage unit 400 may include a first pocket S1 having a substantially rectangular shape, in which a prismatic battery is stored, a second pocket S2 having a substantially cylindrical shape, in which a cylindrical battery is stored, a recess S3 in which a holding device for holding the prismatic battery or the cylindrical battery is entered, and a third pocket S14 having a substantially rectangular shape, in which another prismatic battery is stored. In order to facilitate storage of the prismatic battery or the cylindrical battery, the battery storage unit 100 may include a tapered surface 100a formed on the upper portion of the space S20.

To form the space S20, the battery storage unit 400 may include a second pair of facing side walls 430,440 spaced from each other by facing end walls 410, 420. The side walls 430,440 and facing end walls 410 upstand from a base 450. The facing side wall 430 includes a third inwardly extending protrusion 430e, the facing side wall 440 includes a fourth inwardly extending protrusion 440e, and the base 450 includes a first bottom surface 150a, a second bottom surface 150b and a third bottom surface 450c. The third pocket S14 of the battery storage unit 400 and the first pocket S1 intersect with each other and form substantially an 'X' shape.

In addition, the battery storage unit 400 may include a third guide member 460 and a fourth guide member 470 to guide and arrange multiple types of prismatic batteries (for example, prismatic batteries having different thicknesses) stored in the third pocket S14.

The third guide member 460 and the fourth guide member 470 are formed on the third bottom surface 450c. The third guide member 460 and the fourth guide member 470 have substantially the same configurations and functions as those of the first guide member 160 and the second guide member 170 formed on the first bottom surface 150a, except for their formed positions, and thus detailed descriptions thereof will not be given.

The side surface 130 and the side surface 440 are connected by first arcuate portions 480a, 480b. In addition, the side surface 140 and the side surface 430 are connected by second arcuate portions 490a, 490b. A tapered surface 100a may not be formed at areas of an upper part of the battery storage unit 400 corresponding to the first arcuate portion 480b and the second arcuate portion 490b.

As described above, the battery storage tray according to still another embodiment of the present invention includes the battery storage unit 400 providing the first pocket S1 and the third pocket S14 for storing prismatic batteries, thereby storing multiple types of batteries in a single battery storage unit 400 in more various manners.

Although the present invention has been described with reference to certain exemplary embodiments thereof, it will be understood by those skilled in the art that a variety of modifications and variations may be made to the present invention without departing from the scope of the present invention defined in the appended claims, and their equivalents.

## Claims

1. A battery storage tray including a plurality of battery storage units, each storage unit having a battery receiving space defined by a base, a pair of facing side walls spaced from each other by facing end walls each of which upstand from the base, each facing side wall having substantially planar portions that extend from the ends of each of the facing end walls, the substantially planar portions and the end walls together defining part of a first pocket in said battery receiving space configured to receive a prismatic battery, each facing side wall also having an arcuate portion that extends between the substantially planar portions of each side wall, each arcuate portion extending outwardly in opposite directions to define a second pocket in said battery receiving space, said second pocket being configured to receive a cylindrical battery.

2. A battery storage tray according to claim 1, wherein each of said arcuate portions of the facing side walls have a recess to receive a holding member to retain a prismatic or cylindrical battery in said battery receiving space.

3. A battery storage tray according to claim 1 or 2, wherein the uppermost edges of the facing end walls and the facing side walls are tapered, apart from the uppermost edges of said recesses of each facing side wall.

4. A battery storage tray according to any preceding claim, comprising first and second guide members to control rotation of a prismatic battery having side surfaces and a thickness which is less than the distance between opposing substantially planar portions of the facing side walls during insertion into said first pocket.

5. A battery storage tray according to claim 4, wherein the first and second guide members are configured so that one side surface of the prismatic battery contacts a substantially planar portion of one facing side wall and the other side surface of the prismatic battery contacts a substantially planar portion of the other facing side wall on an opposite side of said arcuate portion.

6. A battery storage tray according to claim 4 or 5, wherein each of the first and second guide members are located on the base at a junction between the substantially planar portion of a facing side wall and an end wall.

7. A battery storage tray according to any of claims 4 to 6, wherein said substantially planar portion of each facing side wall that is contacted by the side surfaces of the prismatic battery includes an inwardly extending protrusion such that opposite side surfaces of a prismatic battery received in said first pocket contact said protrusions.

8. A battery storage tray according to claim 7, wherein each protrusion is configured so as to make a point or line contact with opposite side surfaces of a prismatic battery received in said first pocket.

9. A battery storage tray according to any of claims 4 to 8, wherein each guide member comprises a planar upper surface that extends at an angle relative to the base, such that a prismatic battery makes contact with the planar upper surfaces of each guide member during insertion into the first pocket, said planar upper surfaces being configured to cause the prismatic battery to rotate during further insertion.

10. A battery storage tray according to claim 9, wherein the planar upper surfaces of each guide member are angled in opposite directions and extend from planar side wall portions of opposite facing side walls on either side of said arcuate portion in a direction towards an opposite planar side wall portion of the facing side wall.

11. A battery storage tray according to claims 9 or 10, wherein the planar upper surfaces narrow in a direction away from adjacent end walls.

12. A battery storage tray according to claims 9 to 11, wherein the planar upper surface of each guide member comprises a first portion extending at a first angle from the planar side wall and a second portion extending at a second angle from the first portion, wherein the second angle is steeper than the first angle.

13. A battery storage tray according to any of claims 4 to 12, wherein the first and second guide members extend from each facing end wall in a direction towards each other and terminate at or before the end of the planar side wall portions is reached so that when a cylindrical battery is inserted into said second pocket, it extends between said guide members and contacts the base.

14. A battery storage tray according to claim 1, comprising a third pocket to receive another prismatic battery in place of a prismatic battery or cylindrical battery, said third pocket being defined by a second pair of facing side walls spaced from each other by facing end walls each of which upstand from the base, said second pair of facing side walls having substantially planar portions that extend from the ends of each of the facing end walls, the substantially planar portions and the end walls together defining part of said third pocket in said battery receiving space configured to receive a different prismatic battery, the facing side walls forming the third pocket being spaced from facing side walls of said first pocket by part of said arcuate portion that extends between and connects the substantially planar portions of each side wall forming the first and third pockets, said second pocket being defined by said arcuate portions and being partially formed by a portion of said first and second pockets.

15. A battery storage tray according to claim 14, comprising third and fourth guide members to control rotation of a prismatic battery inserted into said third pocket so that one side surface of the prismatic battery contacts a substantially planar portion of one facing side wall of said third pocket and the other side surface of the prismatic battery contacts a substantially planar portion of the other facing side wall of the third pocket.
